# EUROPEAN PATENT APPLICATION

(11) **EP 4 269 257 A1**
(43) Date of publication of application: **01.11.2023**
(21) Application number: 22461542.7
(22) Date of filing: 27.04.2022
(51) Int. Cl.: B65B 5/04, B65B 5/08, B65B 5/06, B65B 35/30, G16H 20/10, B65B 61/06, B65B 69/00

(54) **A MACHINE FOR HANDLING UNITS OF MEDICATION**

(30) Priority: 26.04.2022 PL 44102622
(71) Applicant: QUIZIT Sp. z o.o., 93-558 Lodz (PL)
(72) Inventor: MUSIALEK, Jakub, 95-050 Konstantynow Lodzki (PL); PAWLOWSKI, Piotr, 99-100 Leczyca (PL); GABARA, Damian, 98-170 Widawa (PL); CIACKA, Lukasz, 62-800 Kalisz (PL); MAJDA, Lukasz, 99-220 Wartkowice (PL); RAK, Vlada, 90-617 Lodz (PL); GRANOSIK, Grzegorz, 92-548 Lodz (PL)
(74) Representative: Kancelaria Eupatent.pl Sp. z.o.o

(57) **Abstract**

A machine for handling units of medication to provide sets of medications, the machine comprising: a modular frame (10A, 10B-10X) for housing modules of the machine; a packing module (20) for packing units of medication into bags (110) and for packing the bags (110) into an intermediate store (120); at least one storing module (30, 90) for storing the intermediate stores (120); a preparing module (50) for preparing sets of medications, wherein the set comprises at least one bag (110); at least one intermediate store manipulator (40, 220) for transferring the intermediate stores (120) between the modules of the machine; and a bag manipulator (60) for transferring the bags (110) from the intermediate stores (120) to the preparing module (50).

## Description

### TECHNICAL FIELD

The present disclosure relates to a machine for handling units of medication, in particular for preparing and packing units of medication, transferring and storing the units of medication, preparing and distributing sets of medications

### BACKGROUND

There are known systems for packing and distributing products in single units, in particular medication units, which are centralized and specially designed for particular applications. Such systems usually comprise a picking device for picking pills or ampules and a packaging device for inserting the pills into a single container, wherein the picking device and packaging device are integrated with a store having a common space in which packed units are stored.

There are also known systems for packing units of medications and for arranging packed units into sets in accordance with specific medical prescriptions. Such systems are commonly used in hospital pharmacies, wherein for each patient a specific group of medicine needs to be delivered several times a day.

However, the abovementioned systems need to be specially designed for specific customer needs and due to their centralized and nonmodular character their functionality or capacity and performance cannot be extended or increased at a later time after installation. Moreover, the units are packed into single containers/bags which are then stored in a common space of the store, which makes it difficult to transfer them to other locations outside the machine or to other modules within the machine.

### SUMMARY

In view of the prior art drawbacks described above, there is a need to provide an improved system for handling medication units, in particular for packing medication units, transferring and storing medication units, preparing and distributing sets of medication units, which is flexible and can be easily adapted to the user needs at any time after the initial set up, and a system which provides a possibility of convenient and safe distribution of sets medications within the system, and/or between distant locations and/or different systems.

The present invention relates to a machine for handling units of medication to provide sets of medications, the machine comprising: a modular frame for housing modules of the machine; a packing module for packing units of medication into bags and for packing the bags into an intermediate store; at least one storing module for storing the intermediate stores; a preparing module for preparing sets of medications, wherein the set comprises at least one bag; at least one intermediate store manipulator for transferring the intermediate stores between the modules of the machine; and a bag manipulator for transferring the bags from the intermediate stores to the preparing module.

Preferably, the modules of the machine are arranged in the modular frame in a single row.

Preferably, the modules of the machine are arranged in the modular frame in two rows and the intermediate stores are transferred between the rows by a rotating manipulator.

Preferably, the machine further comprises a tray store and a tray manipulator for transferring the trays between the tray store and the packing module.

Preferably, the tray manipulator is arranged on a same guiding means as the first intermediate store manipulator.

Preferably, the second intermediate store manipulator is arranged on a same guiding means as the bag manipulator.

Preferably, the machine further comprises a cutting module for cutting blisters of medications into single units.

Preferably, the machine further comprises a box storing module for storing boxes with blisters of medications and a box manipulator for transferring the boxes between the box storing module and the cutting module.

Preferably, the machine further comprises a swingable front port, wherein in a retracted position the swingable front port is operable by the manipulators of the machine and in an extracted position it is accessible to a user at the front of the machine.

Preferably, the preparing module is arranged in the swingable front port for transferring the preparing module to the front of the machine.

Preferably, the swingable front port accommodates electronic components of the machine.

Preferably, the swingable front port accommodates a storing module of the machine.

Preferably, the machine further comprises a drawer slidable out from the machine, located below any of the modules of the machine.

Preferably, the drawer is located below the preparing module and wherein the prepared sets of medications are dropped to the drawer.

Preferably, the drawer accommodates electronic components of the machine.

Preferably, at least one storing module of the machine comprises temperature control system for maintaining low temperature conditions inside the module.

Preferably, the machine further comprises a set storing module for storing prepared sets of medications and a set manipulator 200 for transferring the sets from the preparing module to the set storing module.

Preferably, the machine further comprises a collecting port, with intermediate stores, for sets of medications.

Preferably, the intermediate stores are detachably attached to a wall of the storing module by means of magnets which are located at a back wall of the intermediate store.

The invention also relates to a method for preparing sets of medications comprising the steps of: receiving a tray with units of medication into a packing module; transferring an empty intermediate store from a first storing module to the packing module by a first intermediate store manipulator; packing the units of medications into bags and placing the bags into the intermediate store; transferring the intermediate store filled with bags to the first storing module by means of the first intermediate store manipulator; transferring bags with units from the intermediate stores to a preparing module by means of a bag manipulator; preparing sets of medications comprising at least one bag with unit; delivering the prepared set to a receiving section of the machine.

Preferably, the receiving section is a drawer located below the preparing module.

Preferably, the receiving section is a swingable front port.

Preferably, the tray is being filled with units of medication in a cutting module which cuts blisters of medication into single units.

Preferably, the blisters are introduced to the cutting module on a box which is transferred to the cutting module from a box storing module by means of a box manipulator.

Preferably, the intermediate store filled with bags is transferred to a second storing module by means of the first intermediate store manipulator, a rotating manipulator and a second intermediate store manipulator.

The modular structure of the machine provides a great flexibility in design of the machine which may be easily adapted to the user needs at any time, which means at the time of designing and assembling and later after the installation. The functional properties of the modules may be adapted/altered without significant interference in the structure of the machine.

The utilization of the swingable front ports and drawers provide easy access to the components of the machine and/or for the refilling of the medications and receiving ready final sets of medications.

These and other features, aspects and advantages of the invention will become better understood with reference to the following drawings, descriptions and claims.

### BRIEF DESCRIPTION OF DRAWINGS

The machine presented herein is presented by means of example embodiments on a drawing, wherein:
Fig. 1 presents a modular frame of a machine for providing sets of medications in a first embodiment;
Fig. 2 presents the machine for providing sets of medications without the frame (for clarity) in the first embodiment;
Fig. 3 presents the modular frame of the machine for providing sets of medications in a second embodiment;
Fig. 4 presents the machine for providing sets of medications without the frame (for clarity) in the second embodiment in an isometric top view at a side of a first row;
Fig. 5 presents the machine for providing sets of medications without the frame (for clarity) in the second embodiment in an isometric top view at a side of a second row;
Fig. 6 presents an intermediate store manipulator and a tray manipulator;
Fig. 7 presents a packing module and a tray storing module;
Fig. 8 presents a preparing module and a swingable port in a side view;
Fig. 9 presents a second intermediate store manipulator and a bag manipulator;
Fig. 10 presents a first storing module back wall with sockets;
Fig. 11 presents box storing modules and a box manipulator;
Fig. 12 presents a cutting module;
Fig. 13 presents a single row type machine from Fig. 2 with the cutting module;
Fig. 14 presents steps of a method for preparing sets of medications.

### DETAILED DESCRIPTION OF EMBODIMENTS

The following detailed description is of the best currently contemplated modes of carrying out the invention. The description is not to be taken in a limiting sense, but is made merely for the purpose of illustrating the general principles of the invention.

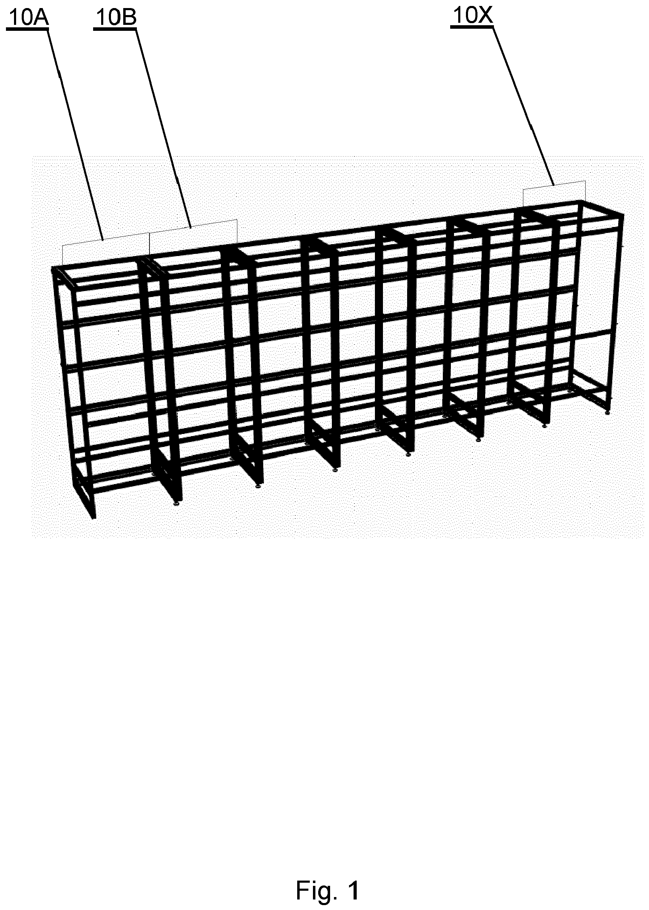

Fig. 1 presents a modular frame of a machine for providing sets of medications in a first embodiment. The frame is formed of profiles which are arranged to form multiple sub frames 10A, 10B-10X for each module of the machine, wherein the single frames and the modules located in these single frames are detachably connected to each other by means of power supply lines, communication lines, ventilation ducts, transportation racks/rails, air-conditioning system etc. It allows to freely configure the machine by changing the number of modules and their locations/order within the machine. In the first embodiment the modules of the machine are arranged in a single row.

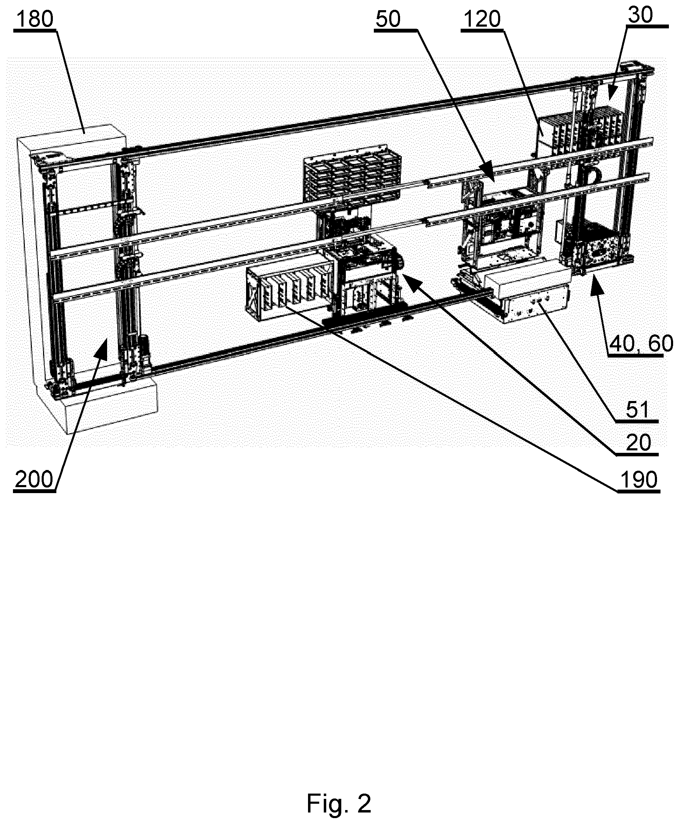

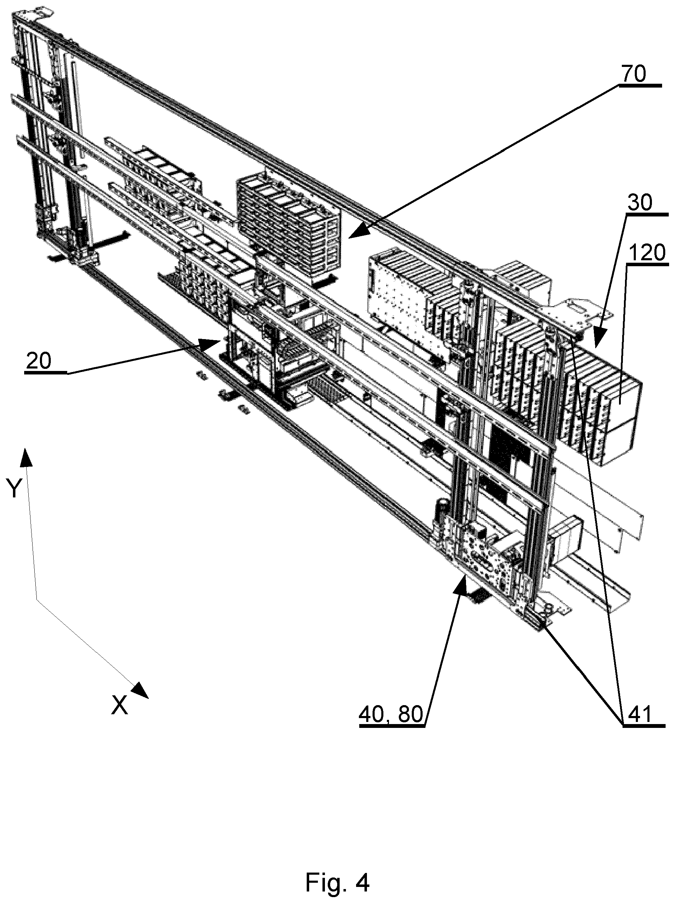

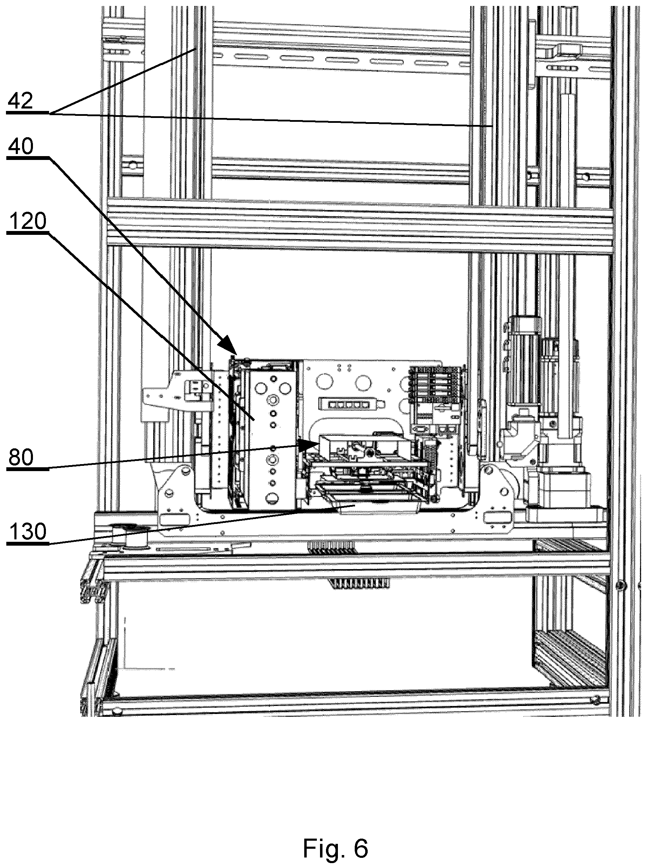

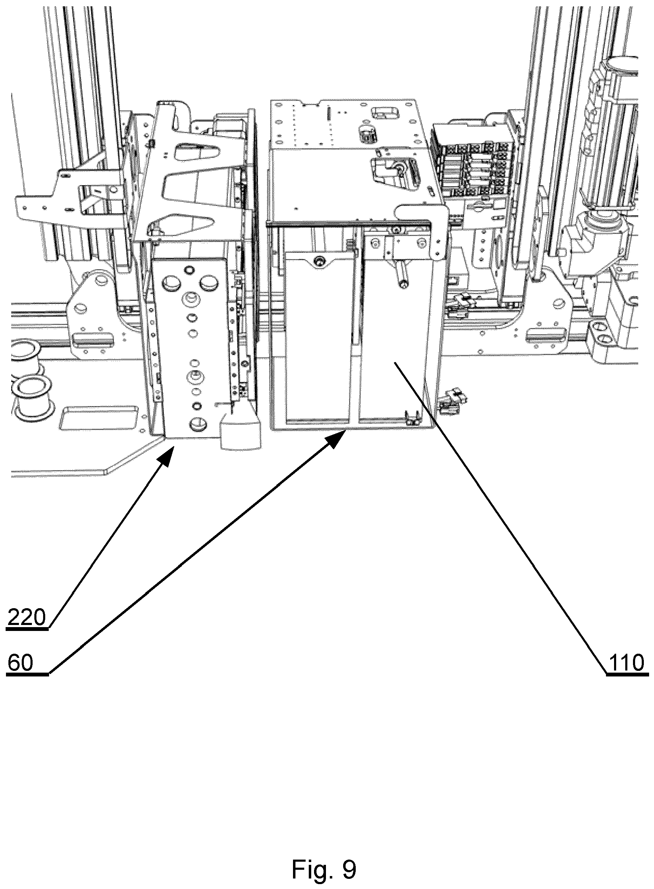

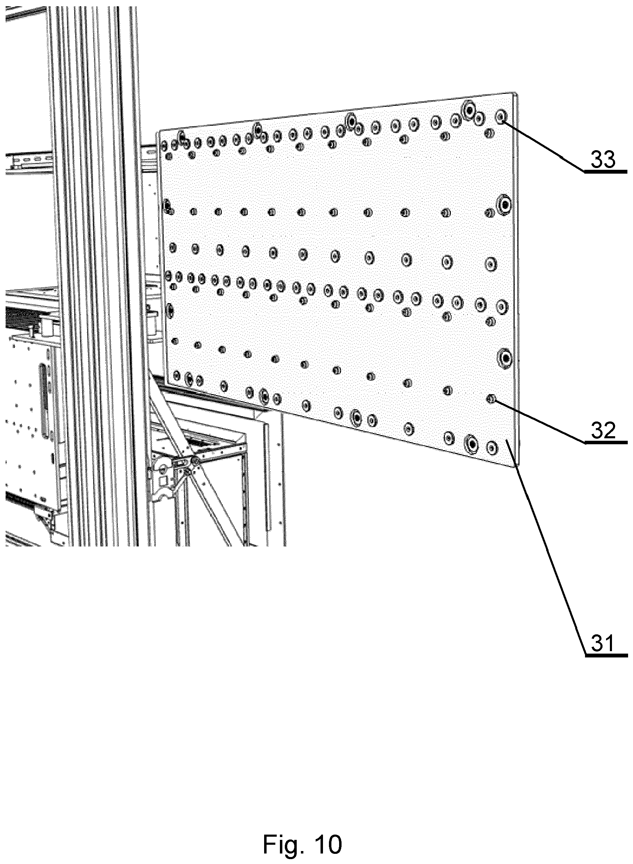

Fig. 2 presents the machine for providing sets of medications without the frame (for clarity) in the first embodiment. The machine comprises a packing module 20 for packing units of medication into bags 110 (Fig. 9) and for packing the bags 110 into an intermediate store 120. The medication units are introduced to the packing machine 20 on a tray 130 (Fig. 6). Each unit is packed into a single bag 110 which preferably has a form of sachet with an opening, allowing the bag 110 to be hanged on a rod like element inside the intermediate store 120. After packing the unit into the bag, the bag 110 is closed and it is transferred to the intermediate store 120. Preferably, each intermediate store 120 is filled with bags 110 containing the same type of medication. The bags 110 inside the intermediate store 120 may be arranged in a single row or in two or more rows one above another. The machine for providing sets of medications further comprises a first storing module 30 for storing the intermediate stores 120 and a first intermediate store manipulator 40 for transferring the intermediate stores 120 between the modules of the machine, for example for transferring empty intermediate stores 120 to the packing module 20 and for transferring intermediate stores 120 containing bags with units from the packing module 20. After receiving the intermediate store 120, containing bags with units, from the packing module 20 the first intermediate store manipulator 40 transfers it to the first storing module 30 which has a wall 31 (Fig. 10) with sockets for receiving the intermediate stores 120. Preferably the intermediate stores 120 are attached to the sockets by means of magnets. Preferably, the sockets have at least one positioning pin 32 for aligning the intermediate store 120 within the socket and have protrusions 33 which interact with magnets 121 located at a back wall of the intermediate store 120. As presented in Fig. 4 the intermediate stores 120 in the first storing module 30 are arranged in rows and columns and their positions are indexed so that the intermediate store manipulator is able to transfer the intermediate store which contains appropriate type of medications. Preferably, the first intermediate store manipulator 40 travels in X direction on rails 41 (Fig. 4) which extend through all modules of the machine. In other embodiments the rails 41 may extend only on a portion of modules of the machine. Preferably, the first intermediate store manipulator 40 travels in Y direction on rails 42 (Fig. 6) on a distance which is substantially equal to a height of an operational area of the machine.

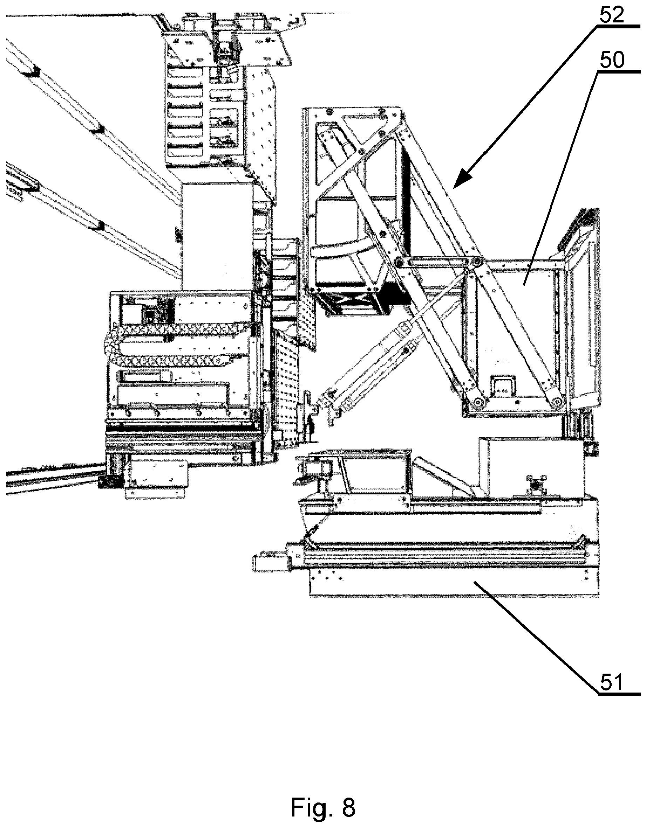

The machine further comprises a preparing module 50 for preparing sets of medications, wherein the set comprises at least one bag 110, and comprises a bag manipulator 60 for transferring bags 110 from the intermediate stores 120 to the preparing module 50. The set of medications may comprise different types of units of medications which are dedicated to a particular patient for a particular day or particular time of administration. The bag manipulator 60 transfers the appropriate bags 110 from different intermediate stores 120 to the preparing module 50 which combines the received bags 110 into the set. Preferably the preparing module 50 extracts the set into a drawer 51 which is located underneath, for collecting the set manually. In other embodiments the prepared sets of medications may be transferred automatically to another module of the machine, for example to a set storing module 180, with intermediate stores 120, under decreased temperature or to the intermediate stores 120 which are located in a collecting port 190. The location of the collecting port 190 may be changed and adapted according to the future, unforeseen at the moment of installation of the machine, needs of a user. The collecting port 190 may have a form of a swingable front port 52 (Fig. 8) as described later in the description. The sets may be transferred by a dedicated manipulator which is arranged on the same guiding rails as the bag transportation manipulator 60, or may constitute a separate manipulator 200. The separate manipulator 200 may also comprise means for transporting intermediate stores 120 or/and trays 130 or/and sets or/and bags 110.

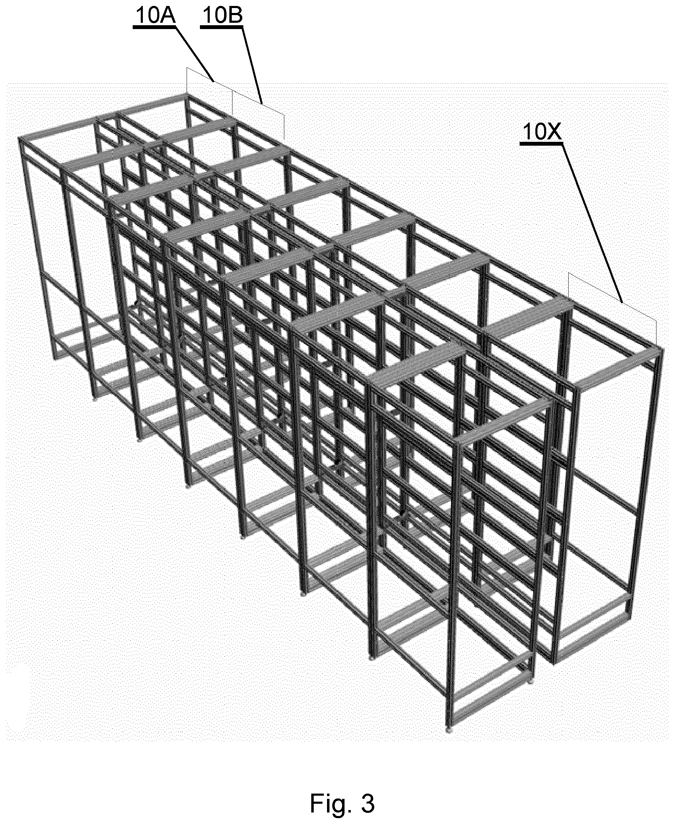

Fig. 3 presents the modular frame of the machine for providing sets of medications in a second embodiment in an isometric top view. In the second embodiment the modules of the machine are arranged in two rows.

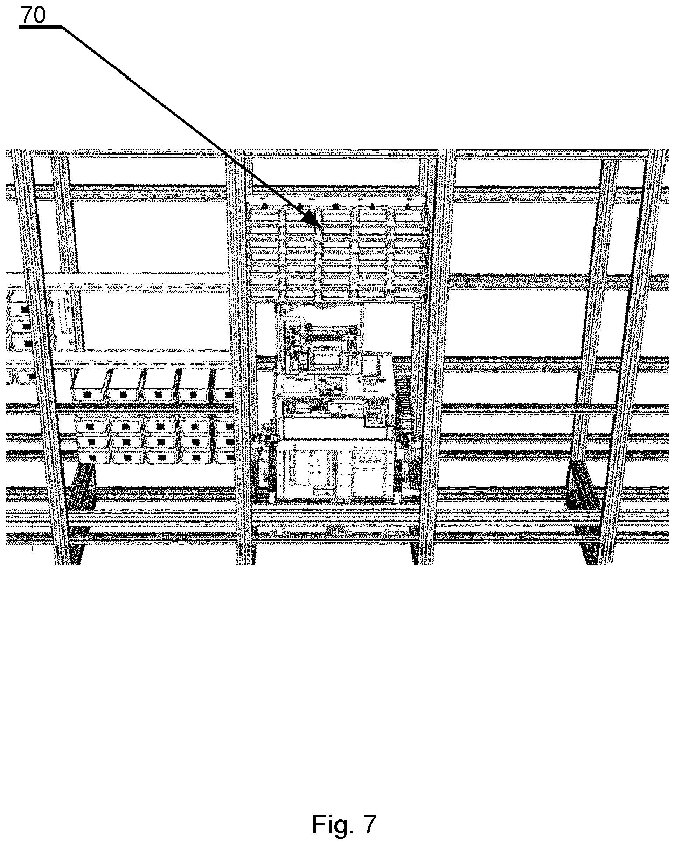

Fig. 4 presents the machine for providing sets of medications without the frame (for clarity) in the second embodiment in an isometric top view at a side of a first row. The modules which are located in the first row will be described below. In the second embodiment the packing module 20 is located in the middle of the first row, but it may be also located in any other frame module 10A, 10B-10X. Above the packing module 20, in the same frame module, is located a tray storing module 70 (Fig. 7), however the tray storing module 70 may also be located in a separate frame module for example next to the packing module 20. At one side of the packing module 20 is located the first storing module 30 and the first intermediate store manipulator 40. In this embodiment the machine comprises also a tray manipulator 80 (Fig. 6) for transferring trays 130 between the tray storing module 70 and the packing unit 20. The tray manipulator 80 is arranged on the same guiding means as the first intermediate store manipulator 40, however in other embodiments it may constitute a separate manipulator.

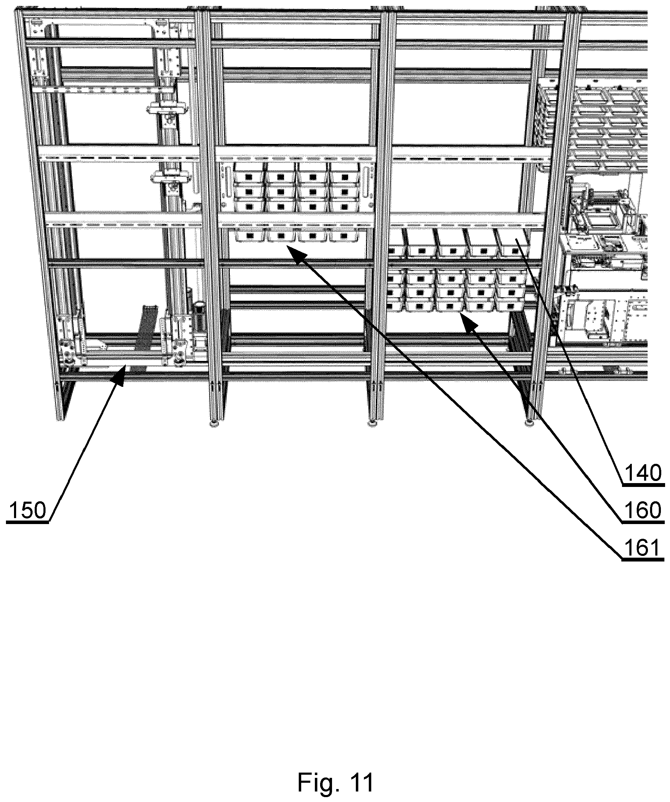

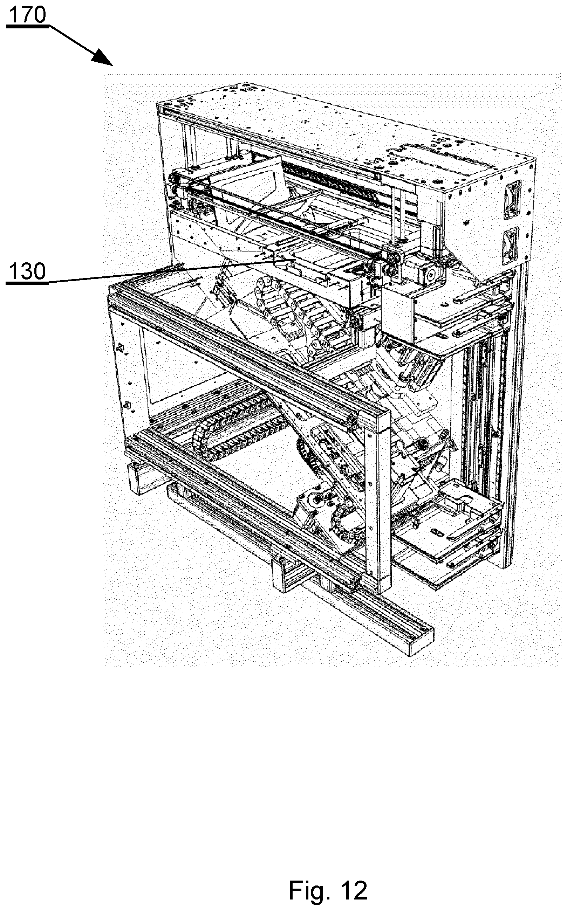

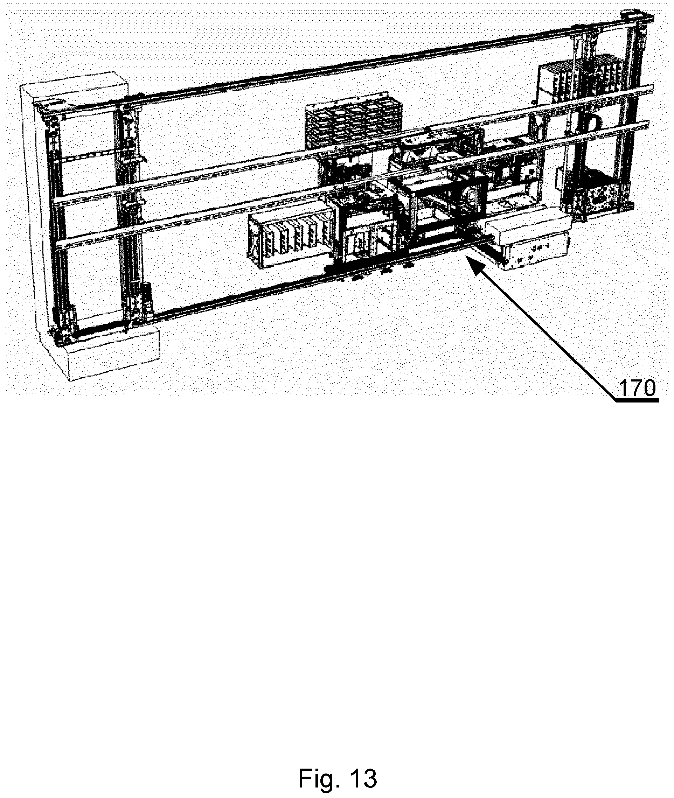

In the first row the machine also comprises a box storing module 160 and 161 with boxes 140 for medications which are stored in their original packages or in blisters (Fig. 11). The machine may further comprise a cutting module 170 (presented without side covers in Fig. 12) for cutting the blisters of medications into single units of medications which are then placed on the trays 130. The boxes 140 are transferred between the box storing module 160 and the cutting module 170 by means of a box manipulator 150, which is presented without effectors for illustrating that any type of effector adapted for transporting the boxes or other types of containers may be attached to the manipulator. The cutting module 170 may also be present in the single row type machine as presented in Fig. 13.

Preferably any module of the machine, in particular any storing module may be equipped with temperature control system which maintains lowered temperature conditions inside the module, which are appropriate for storing certain types of medications.

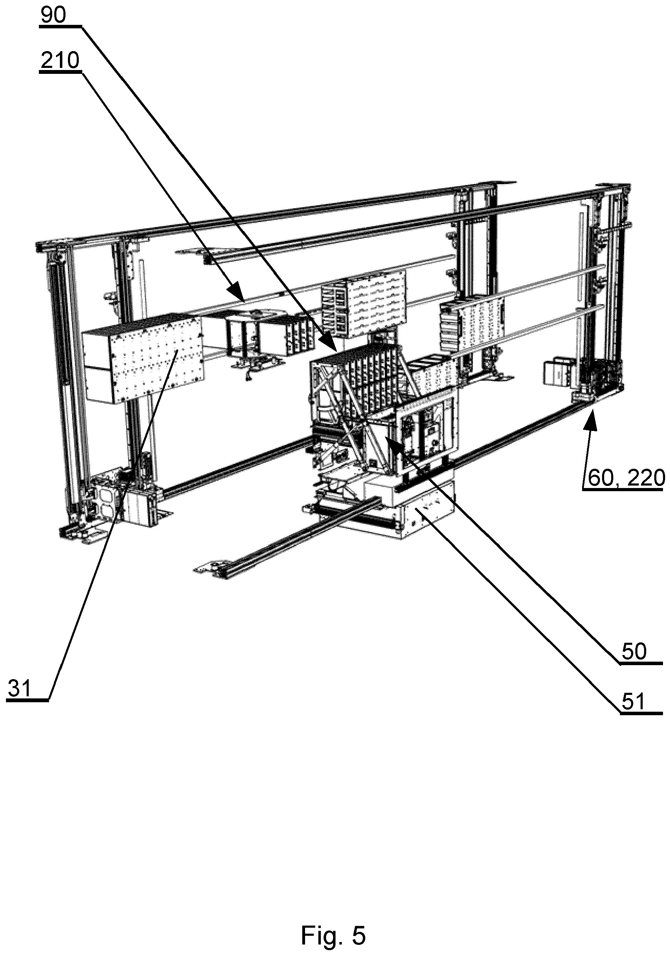

Fig. 5 presents the machine for providing sets of medications without the frame (for clarity) in the second embodiment in an isometric top view at a side of a second row. In the second row the machine comprises a preparing module 50, which is located in the swingable front port 52 (Fig. 8) which is presented in its extracted position. In the extracted position the swingable front port 52 provides access for the user to the module mounted inside it from the front side of the machine. In the present embodiment the swingable front port 52 provides access to the preparing module 50. It is especially convenient during maintenance works or for refiling of materials, medications, wherein the module can be accessed without entering the operating region of the machine. Owing to this the remaining modules of the machine remain functional, apart from the manipulator which is located in the same row which has temporarily a limited range of operation. The swingable front port 52 may also be utilized for any type of module, for example for the packing module or for any storing module, wherein in the extracted position it provides easy access for the user to the intermediate stores 120, trays 130 or boxes 140 for example in order to refill the medications to be processed by the machine. In a retracted position the swingable front port 52 is operable by the manipulators of the machine.

Below the preparing module 50 is located a drawer 51 to which the prepared sets of bags with medication units are dropped from the preparing module 50. The drawer 51 may also be utilized for accommodating electronic components of the machine which after sliding the drawer 51 out are easily accessible to the user for diagnosis or maintenance.

The bags 110 are transferred to the preparing module 50 from the intermediate stores 120 which are located in a second storing module 90 which is located in the second row above the preparing module 50. The second storing module 90 may alternatively be located in a separate frame module 10A, 10B-10X, for example next to the preparing module 50 or at the extreme frame module of the machine. The bags 110 are transferred from the intermediate stores 120 located in the second storing module 90 to the preparing module 50 by means of a bag manipulator 60 which moves along the second row of the machine.

In the second embodiment between the first row and the second row of the machine is located a rotating manipulator 210 for transferring the intermediate stores 120 from the first row to the second row of the machine. In the first row the intermediate stores 120 containing bags with units are transferred to the rotating manipulator 210 by the first intermediate store manipulator 40. Thereafter the rotating manipulator rotates and the intermediate stores 120 are received by a second intermediate store manipulator 220 (Fig. 9) which moves along the second row of the machine. The second intermediate store manipulator 220 transfers the intermediate stores 120 to the preparing module 50. The rotating manipulator 210 may be also utilized for transferring empty intermediate stores 120 back to the first row or may be utilized for transferring other types of intermediate stores, trays, boxes etc.

The second intermediate store manipulator 220 may be arranged on the same guiding means in the second row as the bag manipulator 60, in other words the manipulator (preferably the Cartesian manipulator) may be equipped with two effectors, the first one for transferring bags 110 and the second one for transferring the intermediate stores 120. Similarly in the first row each manipulator may be equipped with two effectors, for example the first one for transferring the trays 130 and the second one for transferring the intermediate stores 120 or other types of stores, or for transferring bags in case the preparing module is located in the first row.

The machine may further comprise multiple modules of the same kind to increase its capacity or/and efficiency by parallelizing the operations which are the most time consuming. For example, in order to increase its efficiency, it may comprise two or more packing modules or/and two or more preparing modules or/and two or more cutting modules, or/and two or more rotating manipulators.

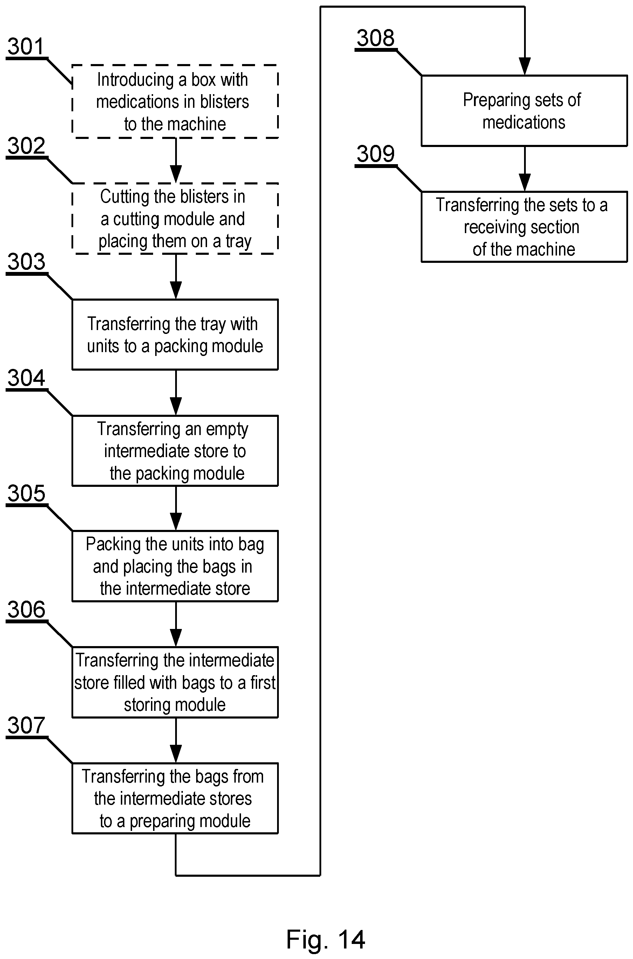

Fig. 14 presents steps of a method for preparing sets of medications. First in step 301 a box with medications in blisters is introduced to the machine. Next, in step 302 the blister is cut into single medication units in a cutting module and the units are placed on a tray. Next, in step 303 the tray with units is transferred to a packing module by means of a tray manipulator. Alternatively, the tray with medication units is delivered by a user directly to the packing module. In step 304 an empty intermediate store is transferred from a first storing module to the packing module by means of a first intermediate store manipulator. In step 305, in the packing module the units of medications are packed into bags and the bags are placed in the intermediate store. Next, in step 306 the intermediate store filled with bags is transferred to the first storing module by means of the first intermediate store manipulator. Alternatively, in case of a machine in which modules are arranged in two rows, the filled intermediate store is transferred to a second storing module located in the second row by means of a first intermediate store manipulator, a rotating manipulator and a second intermediate store manipulator. Next, in step 307 the bags with units are transferred from the intermediate stores to a preparing module by means of a bag manipulator. Next, in step 308 in the preparing module, a set of medications comprising at least one bag with unit is prepared. Next, in step 309 the set is transferred to a collecting port by a set manipulator. Alternatively, the set is dropped from the preparing module to a drawer located below the preparing module.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A machine for handling units of medication to provide sets of medications, the machine comprising:
- a modular frame (10A, 10B-10X) for housing modules of the machine;
- a packing module (20) for packing units of medication into bags (110) and for packing the bags (110) into an intermediate store (120);
- at least one storing module (30, 90) for storing the intermediate stores (120);
- a preparing module (50) for preparing sets of medications, wherein the set comprises at least one bag (110);
- at least one intermediate store manipulator (40, 220) for transferring the intermediate stores (120) between the modules of the machine; and
- a bag manipulator (60) for transferring the bags (110) from the intermediate stores (120) to the preparing module (50).

2. The machine according to claim 1, comprising a tray store (70) and a tray manipulator (80) for transferring the trays (130) between the tray store (70) and the packing module (20).

3. The machine according to any of previous claims comprising a cutting module (170) for cutting blisters of medications into single units.

4. The machine according to claim 7, comprising a box storing module (160) for storing boxes (140) with blisters of medications and a box manipulator (150) for transferring the boxes (140) between the box storing module (160) and the cutting module (170).

5. The machine according to any of previous claims, comprising a swingable front port (52), wherein in a retracted position the swingable front port (52) is operable by the manipulators of the machine and in an extracted position it is accessible to a user at the front of the machine.

6. The machine according to any of previous claims, comprising a drawer (51) slidable out from the machine, located below any of the modules of the machine.

7. The machine according to any of previous claims, comprising a set storing module (180) for storing prepared sets of medications and a set manipulator 200 for transferring the sets from the preparing module (50) to the set storing module (180).

8. The machine according to any of previous claims, comprising a collecting port (190), with intermediate stores (120), for sets of medications.

9. The machine according to any of previous claims, wherein the intermediate stores (120) are detachably attached to a wall (31) of the storing module (30, 90) by means of magnets which are located at a back wall of the intermediate store (120).

10. A method for preparing sets of medications comprising the steps of:
- receiving (303) a tray (130) with units of medication into a packing module (20);
- transferring (304) an empty intermediate store (120) from a first storing module (30) to the packing module (20) by a first intermediate store manipulator (40);
- packing (305) the units of medications into bags (110) and placing the bags (110) into the intermediate store (120);
- transferring (306) the intermediate store (120) filled with bags (110) to the first storing module (30) by means of the first intermediate store manipulator (40);
- transferring (307) bags with units from the intermediate stores (120) to a preparing module (50) by means of a bag manipulator (60);
- preparing (308) sets of medications comprising at least one bag (110) with unit;
- delivering (309) the prepared set to a receiving section of the machine.

11. The method according to claim 10, wherein the receiving section is a drawer (51) located below the preparing module (50).

12. The method according to claim 10, wherein the receiving section is a swingable front port (52).

13. The method according to any of claims 10-12 wherein, the tray (130) is being filled with units of medication in a cutting module (170) which cuts blisters of medication into single units.

14. The method according to claim 13, wherein the blisters are introduced to the cutting module (170) on a box (140) which is transferred to the cutting module (170) from a box storing module (160) by means of a box manipulator (150).

15. The method according to any of claims 10-14, wherein the intermediate store (120) filled with bags (110) is transferred to a second storing module (90) by means of the first intermediate store manipulator (40), a rotating manipulator (210) and a second intermediate store manipulator (220).
